# EUROPEAN PATENT APPLICATION

(11) **EP 2 466 439 A2**
(43) Date of publication of application: **20.06.2012**
(21) Application number: 11009739.1
(22) Date of filing: 09.12.2011
(51) Int. Cl.: G06F 3/048

(54) **Mobile terminal and operation control method thereof**

(30) Priority: 16.12.2010 KR 20100128832
(71) Applicant: LG Electronics Inc., Seoul 150-721 (KR)
(72) Inventor: Kang, Raehoon, Seoul 153-023 (KR); Lee, Jiyoun, Seoul 153-023 (KR); Jang, Hyungtae, Seoul 153-023 (KR); Jang, Seokjin, Seoul 153-023 (KR); Lee, Choonjae, Seoul 153-023 (KR); Lee, Minjeong, Seoul 153-023 (KR)
(74) Representative: Urner, Peter

(57) **Abstract**

A mobile terminal and an operation control method may be provided. A display screen may be displayed. A multi-touch input may be received that includes first and second touch inputs at first and second touch areas on the display module. The touchable objects may be displayed at areas that include points of detection of the first touch input and the second touch input, respectively.

## Description

### CROSS-REFERENCE TO RELATED APPLICATION

This application claims priority benefit of Korean Patent Application No. 10-2010-0128832, filed December 16, 2010, the subject matter of which is incorporated herein by reference.

### BACKGROUND

### 1. Field

Embodiments may relate to a mobile terminal and/or an operation control method of a mobile terminal.

### 2. Background

Mobile terminals are portable devices that may provide users with various services such as a voice calling service, a video calling service, an information input/output service, and/or a data storage service.

An increasing number of mobile terminals may be equipped with various complicated functions, such as capturing photos or moving pictures, playing music files or moving image files, providing game programs, receiving broadcast programs and/or providing wireless internet services. Mobile terminals have thus evolved into multimedia players.

Such complicated functions may be realized as hardware devices or software programs. For example, various user interface (UI) environments may allow users to easily search for and choose desired functions, have been developed. Additionally, the demand for various designs for mobile terminals, such as double-sided liquid crystal displays (LCDs) or full touch screens, has grown due to a growing tendency of considering mobile terminals as personal items that can represent personal individuality.

Due to an increase in size of touch screens for mobile terminals (such as tablet-type mobile terminals), users may increasingly have difficulty properly controlling the touch screens of their mobile terminals while holding the mobile terminals with both hands. Since mobile terminals equipped with large touch screens may be big and heavy, it may be difficult to control the touch screens with one hand while holding the mobile terminals in the other hand.

Therefore, a method may be needed to control operation of a mobile terminal through a new data input/output method and thus to enable various functions of the mobile terminal through touch manipulations even when the mobile terminal is held by both hands.

### BRIEF DESCRIPTION OF THE DRAWINGS

Arrangements and embodiments may be described in detail with reference to the following drawings in which like reference numerals refer to like elements and wherein:

FIG. 1 is a block diagram of a mobile terminal according to an exemplary embodiment;

FIG. 2 is a front perspective view of the mobile terminal shown in FIG. 1;

FIG. 3 is a diagram illustrating an example of a setting of touch areas;

FIG. 4 is a flowchart illustrating an operation control method of a mobile terminal according to an exemplary embodiment;

FIG. 5 is a flowchart illustrating an operation control method of a mobile terminal according to an exemplary embodiment;

FIGs. 6 and 7 are diagrams illustrating the exemplary embodiment of FIG. 4; and

FIGS. 8 through 15 are diagrams illustrating the exemplary embodiment of FIG. 5.

### DETAILED DESCRIPTION

The term 'mobile terminal', as used herein, may indicate a mobile phone, a smart phone, a laptop computer, a digital broadcast receiver, a personal digital assistant (PDA), a portable multimedia player (PMP), a camera, a navigation device, a tablet computer, and/or an electronic book (e-book) reader. The terms 'module' and 'unit' may be used interchangeably.

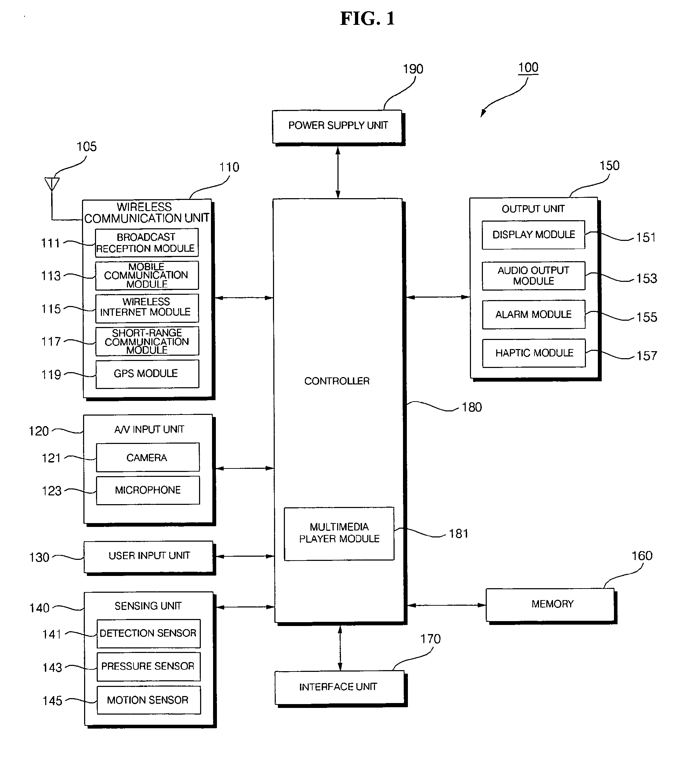

FIG. 1 illustrates a block diagram of a mobile terminal according to an exemplary embodiment. Other embodiments and configurations may also be provided.

Referring to FIG. 1, a mobile terminal 100 may include a wireless communication unit 110, an audio/video (A/V) input unit 120, a user input unit 130, a sensing unit 140, an output unit 150, a memory 160, an interface unit 170, a controller 180, and a power supply unit 190. Two or more of the wireless communication unit 110, the A/V input unit 120, the user input unit 130, the sensing unit 140, the output unit 150, the memory 160, the interface unit 170, the controller 180, and the power supply unit 190 may be incorporated into a single unit, or some of the wireless communication unit 110, the A/V input unit 120, the user input unit 130, the sensing unit 140, the output unit 150, the memory 160, the interface unit 170, the controller 180, and the power supply unit 190 may be divided into two or more units.

The wireless communication unit 110 may include a broadcast reception module 111, a mobile communication module 113, a wireless internet module 115, a short-range communication module 117, and a global positioning system (GPS) module 119.

The broadcast reception module 111 may receive a broadcast signal and/or broadcast-related information from an external broadcast management server through a broadcast channel. The broadcast channel may be a satellite channel or a terrestrial channel. The broadcast management server may be a server that generates broadcast signals and/or broadcast-related information and transmits the generated broadcast signals and/or the generated broadcast-related information or may be a server that receives and then transmits previously-generated broadcast signals and/or previously-generated broadcast-related information.

The broadcast-related information may include broadcast channel information, broadcast program information and/or broadcast service provider information. The broadcast signal may be a TV broadcast signal, a radio broadcast signal, a data broadcast signal, a combination of a data broadcast signal and a TV broadcast signal or a combination of a data broadcast signal and a radio broadcast signal. The broadcast-related information may be provided to the mobile terminal 100 through a mobile communication network. In this example, the broadcast-related information may be received by the mobile communication module 113, rather than by the broadcast reception module 111. The broadcast-related information may come in various forms. For example, the broadcast-related information may be an electronic program guide (EPG) of digital multimedia broadcasting (DMB) or may be an electronic service guide (ESG) of digital video broadcast-handheld (DVB-H).

The broadcast reception module 111 may receive the broadcast signal using various broadcasting systems such as digital multimedia broadcasting-terrestrial (DMB-T), digital multimedia broadcasting-satellite (DMB-S), media forward link only (MediaFLO), DVB-H, and/or integrated services digital broadcast-terrestrial (ISDB-T). Additionally, the broadcast reception module 111 may be suitable for nearly all types of broadcasting systems, other than those set forth herein. The broadcast signal and/or the broadcast-related information received by the broadcast reception module 111 may be stored in the memory 160.

The mobile communication module 113 may transmit wireless signals to or receive wireless signals from at least one of a base station, an external terminal, and a server through a mobile communication network. The wireless signals may include various types of data according to whether the mobile terminal 100 transmits/receives voice call signals, video call signals, and/or text/multimedia messages.

The wireless internet module 115 may be a module for wirelessly accessing the internet. The wireless internet module 115 may be embedded in the mobile terminal 100 or may be installed in an external device. The wireless internet module 115 may be embedded in the mobile terminal 100 or may be installed in an external device. The wireless internet module 115 may use various wireless internet technologies such as wireless local area network (WLAN), Wireless Broadband (WiBro), World lnteroperability for Microwave Access (Wimax), and High Speed Downlink Packet Access (HSDPA), for example.

The short-range communication module 117 may be a module for short-range communication. The short-range communication module 117 may use various short-range communication techniques such as Bluetooth, radio frequency identification (RFID), infrared data association (IrDA), ultra wideband (UWB), and/or ZigBee.

The GPS module 119 may receive position information from a plurality of GPS satellites.

The A/V input unit 120 may receive audio signals or video signals. The A/V input unit 120 may include a camera 121 and a microphone 123. The camera 121 may process various image frames, such as still images or moving images captured by an image sensor during a video call mode or an image capturing mode. The image frames processed by the camera 121 may be displayed by a display module 151.

The image frames processed by the camera 121 may be stored in the memory 160 or may be transmitted to an external device through the wireless communication unit 110. The mobile terminal 100 may include two or more cameras 121.

The microphone 123 may receive external sound signals during a call mode, a recording mode, and/or a voice recognition mode by using a microphone, and may convert the sound signals into electrical sound data. In the call mode, the mobile communication module 113 may convert the electrical sound data into data that may be readily transmitted to a mobile communication base station and then output the data obtained by the conversion. The microphone 123 may use various noise removal algorithms to remove (or reduce) noise that may be generated during reception of external sound signals.

The user input unit 130 may generate key input data based on a user input for controlling an operation of the mobile terminal 100. The user input unit 130 may be implemented as a keypad, a dome switch, or a static pressure or capacitive touch pad that is capable of receiving a command or information by being pushed or touched by a user. Alternatively, the user input unit 130 may be implemented as a wheel, a jog dial or wheel, and/or a joystick capable of receiving a command or information by being rotated. Still alternatively, the user input unit 130 may be implemented as a finger mouse. More particularly, in an example in which the user input unit 130 is implemented as a touch pad and forms a mutual layer structure with the display module 151, the user input unit 130 and the display module 151 may be collectively referred to as a touch screen.

The sensing unit 140 may determine a current state of the mobile terminal 100 such as whether the mobile terminal 100 is opened or closed, a position of the mobile terminal 100 and whether the mobile terminal 100 is placed in contact with a user, and the sensing unit 140 may generate a sensing signal for controlling an operation of the mobile terminal 100. For example, when the mobile terminal 100 is a slider-type mobile phone, the sensing unit 140 may determine whether the mobile terminal 100 is opened or closed. Additionally, the sensing unit 140 may determine whether the mobile terminal 100 is powered by the power supply unit 190 and whether the interface unit 170 is connected to an external device.

The sensing unit 140 may include a detection sensor 141, a pressure sensor 143 and a motion sensor 145. The detection sensor 141 may determine whether there is an object nearby and approaching the mobile terminal 100 without any mechanical contact with the entity. More specifically, the detection sensor 141 may detect an object that is nearby and approaching by detecting a change in an alternating magnetic field or a rate of change of static capacitance. The sensing unit 140 may include two or more detection sensors 141.

The pressure sensor 143 may determine whether pressure is applied to the mobile terminal 100 or may measure a level of pressure, if any, applied to the mobile terminal 100. The pressure sensor 143 may be provided in a certain part of the mobile terminal 100 where detection of pressure is necessary. For example, the pressure sensor 143 may be provided in the display module 151. A touch input may be differentiated from a pressure touch input, which may be generated using a higher pressure level than that used to generate a touch input, based on data provided by the pressure sensor 143. Additionally, when a pressure touch input is received through the display module 151, the level of pressure applied to the display module 151 may be determined upon detection of a pressure touch input based on data provided by the pressure sensor 143.

The motion sensor 145 may determine location and motion of the mobile terminal 100 using an acceleration sensor or a gyro sensor, for example.

Acceleration sensors are a type of device for converting a vibration in acceleration into an electric signal. With developments in micro-electromechanical system (MEMS) technology, acceleration sensors may be used in various products for various purposes ranging from detecting large motions (such as car collisions as performed in airbag systems for automobiles) to detecting minute motions (such as motion of a hand as performed in gaming input devices). One or more acceleration sensors representing two or three axial directions may be incorporated into a single package. There may be examples when detection of only one axial direction (e.g., a Z-axis direction) is necessary. Thus, when an X- or Y-axis acceleration sensor, rather than a Z-axis acceleration sensor, is required, the X- or Y-axis acceleration sensor may be mounted on an additional substrate, and the additional substrate may be mounted on a main substrate.

Gyro sensors may measure angular velocity, and may determine a relative direction of rotation of the mobile terminal 100 to a reference direction.

The output unit 150 may output audio signals, video signals and alarm signals. The output unit 150 may include the display module 151, an audio output module 153, an alarm module 155, and a haptic module 157.

The display module 151 may display various information processed by the mobile terminal 100. For example, an example in which the mobile terminal 100 is in a call mode, the display module 151 may display a user interface (UI) or a graphic user interface (GUI) for making or receiving a call. In an example in which the mobile terminal 100 is in a video call mode or an image capturing mode, the display module 151 may display a UI or a GUI for capturing or receiving images.

In an example in which the display module 151 and the user input unit 130 form a layer structure together and are thus implemented as a touch screen, the display module 151 may be used as both an output device and an input device. In an example in which the display module 151 is implemented as a touch screen, the display module 151 may also include a touch screen panel and a touch screen panel controller. The touch screen panel may be a transparent panel attached onto an exterior of the mobile terminal 100 and may be connected to an internal bus of the mobile terminal 100. The touch screen panel may keep monitoring whether the touch screen panel is being touched by the user. Once a touch input to the touch screen panel is received, the touch screen panel may transmit a number of signals corresponding to the touch input to the touch screen panel controller. The touch screen panel controller may process the signals transmitted by the touch screen panel, and transmit the processed signals to the controller 180. The controller 180 may then determine whether a touch input has been generated and which part of the touch screen panel has been touched based on the processed signals transmitted by the touch screen panel controller.

The display module 151 may include electronic paper (e-paper). E-paper is a type of reflective display technology and may provide as high resolution as ordinary ink on paper, wide viewing angles, and/or excellent visual properties, for example. E-paper may be implemented on various types of substrates (such as a plastic, metallic or paper substrate) and may display and maintain an image thereon even after power is cut off. Additionally, e-paper may reduce power consumption of the mobile terminal 100 because it does not require a backlight assembly. The display module 151 may be implemented as e-paper by using electrostatic-charged hemispherical twist balls, using electrophoretic deposition, and/or using microcapsules.

The display module 151 may include at least one of a liquid crystal display (LCD), a thin film transistor (TFT)-LCD, an organic light-emitting diode (OLED), a flexible display, and/or a three-dimensional (3D) display. The mobile terminal 100 may include two or more display modules 151. For example, the mobile terminal 100 may include an external display module and an internal display module.

The audio output module 153 may output audio data received by the wireless communication unit 110 during a call reception mode, a call mode, a recording mode, a voice recognition mode, and/or a broadcast reception mode, or the audio output module 153 may output audio data present in the memory 160. Additionally, the audio output module 153 may output various sound signals associated with functions of the mobile terminal 100 such as receiving a call or a message. The audio output module 153 may include a speaker and a buzzer.

The alarm module 155 may output an alarm signal indicating an occurrence of an event in the mobile terminal 100. Examples of the event include receiving a call signal, receiving a message, and/or receiving a key signal. Examples of the alarm signal output by the alarm module 155 may include an audio signal, a video signal and/or a vibration signal. More specifically, the alarm module 155 may output an alarm signal upon receiving a call signal or a message. Additionally, the alarm module 155 may receive a key signal and may output an alarm signal as feedback to the key signal. Therefore, the user may easily recognize an occurrence of an event based on an alarm signal output by the alarm module 155. An alarm signal for notifying the user of the occurrence of an event may be output not only by the alarm module 155 but also by the display module 151 or the audio output module 153.

The haptic module 157 may provide various haptic effects (such as vibration) that may be perceived by the user. In an example in which the haptic module 157 generates vibration as a haptic effect, an intensity and a pattern of vibration generated by the haptic module 157 may be altered in various manners. The haptic module 157 may synthesize different vibration effects and may output a result of the synthesization. Alternatively, the haptic module 157 may sequentially output different vibration effects.

The haptic module 157 may provide various haptic effects, other than vibration, such as a haptic effect obtained using a pin array that moves perpendicularly to a contact skin surface, a haptic effect obtained by injecting or sucking in air through an injection hole or a suction hole, a haptic effect obtained by giving a stimulus to the surface of the skin, a haptic effect obtained through contact with an electrode, a haptic effect obtained using an electrostatic force, and a haptic effect obtained by realizing a sense of heat or cold using a device capable of absorbing heat or generating heat. The haptic module 157 may enable the user to recognize a haptic effect using the kinesthetic sense of the fingers or the arms. The mobile terminal 100 may include two or more haptic modules 157.

The memory 160 may store various programs necessary for operation of the controller 180. Additionally, the memory 160 may temporarily store various data such as a phonebook, messages, still images, and/or moving images.

The memory 160 may include at least one of a flash memory type storage medium, a hard disk type storage medium, a multimedia card micro type storage medium, a card type memory (e.g., a secure digital (SD) or extreme digital (XD) memory), a random access memory (RAM), and a read-only memory (ROM). The mobile terminal 100 may operate a web storage that performs functions of the memory 160 on the internet.

The interface unit 170 may interface with an external device that can be connected to the mobile terminal 100. The interface unit 170 may be a wired/wireless headset, an external battery charger, a wired/wireless data port, a card socket (for a memory card, a subscriber identification module (SIM) card or a user identity module (UIM) card), an audio input/output (I/O) terminal, a video I/O terminal, and/or an earphone. The interface unit 170 may receive data from an external device or may be powered by an external device. The interface unit 170 may transmit data provided by an external device to other components in the mobile terminal 100 or may transmit data provided by other components in the mobile terminal 100 to an external device.

When the mobile terminal 100 is connected to an external cradle, the interface unit 170 may provide a path for supplying power from the external cradle to the mobile terminal 100 or for transmitting various signals from the external cradle to the mobile terminal 100.

The controller 180 may control the operation of the mobile terminal 100. For example, the controller 180 may perform various control operations regarding making/receiving a voice call, transmitting/receiving data, and/or making/receiving a video call. The controller 180 may include a multimedia player module 181 that plays multimedia data. The multimedia player module 181 may be implemented as a hardware device and may be installed in the controller 180. Alternatively, the multimedia player module 181 may be implemented as a software program.

The power supply unit 190 may be supplied with power by an external power source or an internal power source and may supply power to other components in the mobile terminal 100.

The mobile terminal 100 may include a wired/wireless communication system or a satellite communication system, and may thus operate in a communication system capable of transmitting data in units of frames or packets.

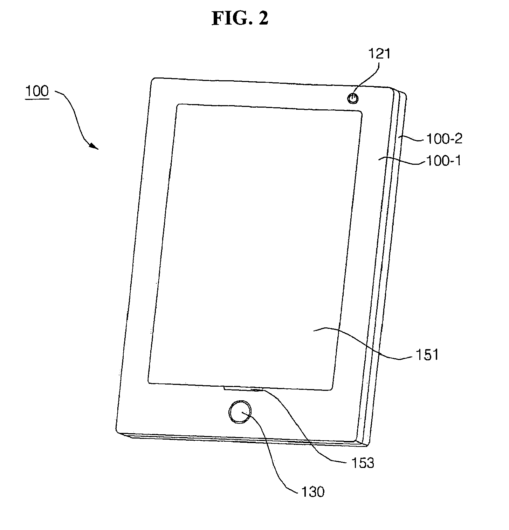

The exterior structure of the mobile terminal 100 (e.g., a tablet computer) may hereinafter be described with reference to FIG. 2.

FIG. 2 illustrates a front perspective view of the mobile terminal 100. Other configurations may also be provided.

As shown in FIG. 2, an exterior of the mobile terminal 100 may be formed by a front case 100-1 and a rear case 100-2. Various electronic devices may be installed in a space formed by the front case 100-1 and the rear case 100-2. The front case 100-1 and the rear case 100-2 may be formed of a synthetic resin through injection molding. Alternatively, the front case 100-1 and the rear case 100-2 may be formed of a metal such as stainless steel (STS) or titanium (Ti).

The display module 151, the audio output module 153, the camera 121, and the user input unit 130 may be disposed in the main body of the mobile terminal 100, and more particularly on the front case 100-1.

In an example in which a touch pad is configured to overlap the display module 151 and thus form a mutual layer structure, the display module 151 may serve as a touch screen. Thus, the user may enter various information to the mobile terminal 100 by touching the display module 151.

The audio output module 153 may be implemented as a receiver or a speaker. The camera 121 may be suitable for capturing a still image of the user or a moving image of the user. The microphone 123 may properly receive the user's voice or other sounds. Another user input unit and an interface unit may be additionally provided on one side of the front case 100-1 or the rear case 100-2.

The user input unit 130 may employ any means so long as it can operate in a tactile manner. For example, the user input unit 130 may be implemented as a dome switch or a touch pad that may receive a command or information according to a pressing or a touch operation by the user, or the user input unit 130 may be implemented as a wheel or jog type for rotating a key or as a joystick. The user input unit 130 may operate as function keys for entering commands, such as start, end, or scroll, numbers and symbols, for selecting an operating mode for the mobile terminal 100, and for activating a special function within the mobile terminal 100. The microphone 123 may properly receive the user's voice or other sounds.

Another camera may be additionally provided on the rear case 100-2. The camera at the rear of the mobile terminal 100 may have an image capture direction that is substantially the opposite to a direction of the camera 121, which is provided at the front of the mobile terminal 100, and may have a different resolution from a resolution of the camera 121. For example, the camera 121 may have a low resolution and thus may be suitable for quickly capturing an image or video of the user's face and immediately sending the image or video to the other party during video conferencing. The camera at the rear of the mobile terminal 100 may have a high resolution and may thus be suitable for capturing more detailed, higher quality images or videos that do not need to be transmitted immediately.

Another audio output module may be additionally provided on the rear case 100-2. The audio output module on the rear case 100-2 may realize a stereo function along with the audio output module 153 on the front case 100-1. The audio output module on the rear case 100-2 may also be used in a speaker-phone mode.

A broadcast signal reception antenna may be provided at one side of the front case 100-1 or the rear case 100-2, in addition to an antenna used for call communication. The broadcast signal reception antenna may be installed such that it may extend from the front case 100-1 or the rear case 100-2.

A power supply unit may be mounted on the rear case 100-2 and may supply power to the mobile terminal 100. The power supply unit may be a chargeable battery that can be detachably combined to the rear case 100-2 for being charged.

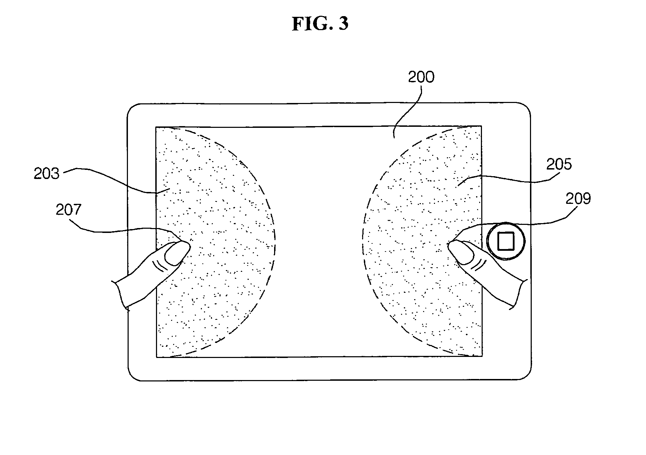

FIG. 3 illustrates an example of setting of touch areas that may be employed in a mobile terminal. Other embodiments and configurations may also be provided.

FIG. 3 shows an example in which a user holds (or grabs or touches) the mobile terminal 100 with both hands (or the thumb of both hands). The sides of a display screen 200 may be set as a first touch area 203 and a second touch area 205 in which to enter a touch input.

A multi-touch input may include a first touch input 207 and a second touch input 209 detected at (or from) the first and second touch areas 203 and 205, respectively. When a multi-touch input is received, icons displayed on the display screen 200 may move to the first and second touch areas 203 and 205. In other words, the icons may now be displayed at the first and second touch areas 203 and 205. The icon may be displayed at a point of detection within the first and second touch areas 203 and 205.

In an example in which the multi-touch input (including the first touch input 207 and the second touch input 209) is received when the mobile terminal 100 is in a lock mode, the mobile terminal 100 may be released from the lock mode.

A size and a shape of the first and second touch areas 203 and 205 may be changed by a user. For example, a display direction of the mobile terminal 100 may change in response to the mobile terminal 100 being rotated, and positions of the first and second touch areas 203 and 205 may change accordingly.

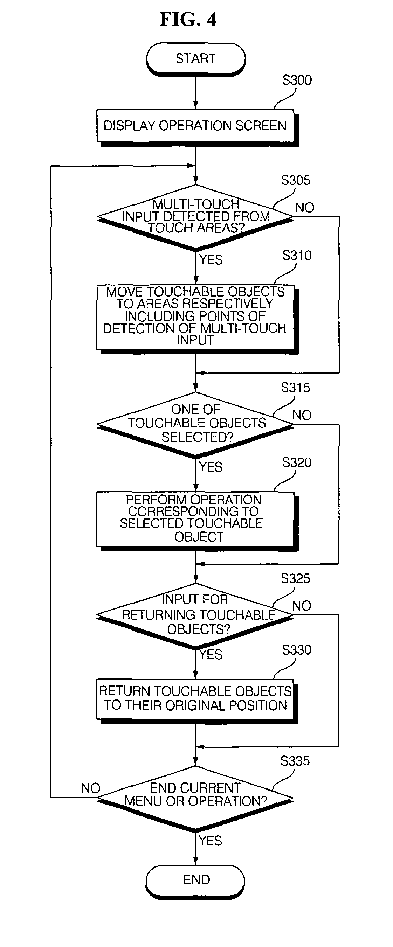

FIG. 4 is a flowchart of an operation control method of a mobile terminal, according to an exemplary embodiment of the present invention. Other operations, orders of operations and embodiments may also be provided.

As shown in FIG. 4, the controller 180 may display an operation screen corresponding to a current menu or an operation selected by a user on the display module 151 (S300). Examples of the operation screen may include an idle screen, a main menu screen, a still-image or moving-image viewer screen, an incoming message screen, an outgoing message screen, a broadcast viewer screen, a map screen, and/or a webpage screen.

In response to displaying the operation screen on the display module 151, the controller 180 may determine whether a multi-touch input (including first and second touch inputs respectively detected from first and second touch areas, respectively) is detected from the display module 151 (S305).

Parts on the display module 151 that the user may touch (with thumbs, for example) while holding the mobile terminal 100 (such as with both hands) may be set as the first and second touch areas. In an example in which the first and second touch inputs are detected at a same time or one after another, the first and second touch inputs may be recognized as a multi-touch input.

When it is determined (in operation S305) that a multi-touch input (including the first and second touch inputs) has been detected from the display module 151, the controller 180 may move one or more displayed touchable objects to two regions, such as points of detection of the first and second touch inputs (S310).

For example, the controller 180 may move the displayed touchable objects to an area on the display module 151 in which the user may actually perform nearly all types of touch manipulations on the touchable objects while still holding (or touching) the mobile terminal 100 (with both hands, for example). Examples of the touchable objects may include various objects such as an icon, a thumbnail, or an item included in a list that may lead to execution of operations or functions in response to being touched.

When one of the touchable objects is selected by being touched (S315), the controller 180 may control an operation corresponding to the selected touchable object (S320).

When a user input for returning the touchable objects to their original (or previous) position is received (S325), the controller 180 may return the touchable objects to their original (or previous) position (S330). The user input for returning the touchable objects to their original (or previous) position may be considered as being received when at least one of the first and second touch inputs is no longer detected for more than a predetermined amount of time.

Operations S305 through S330 may be repeatedly performed until the user chooses to terminate the current menu or operation (S335).

According to this exemplary embodiment, the user may effectively control operation of the mobile terminal 100 by performing various touch manipulations on the mobile terminal 100 with the thumbs while holding (or touching) the mobile terminal 100 with both hands. The mobile terminal 100 may be touched or held by parts other than thumbs.

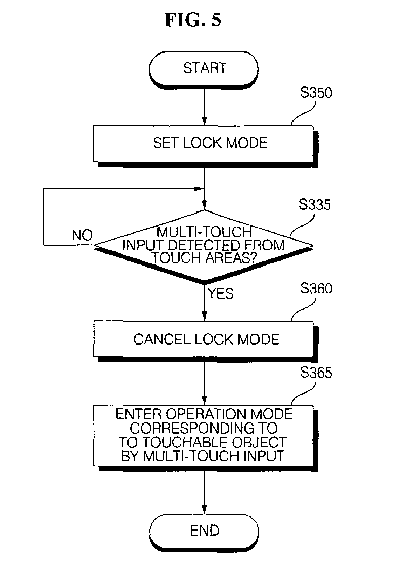

FIG. 5 is a flowchart of an operation control method of a mobile terminal according to an exemplary embodiment of the present invention. Other operations, orders of operations and embodiments may also be provided.

As shown in FIG. 5, in response to no touch or a key input being detected for more than a predetermined amount of time or in response to a lock command being received from a user, the controller 180 may provide the mobile terminal 100 in a protection mode or a lock mode, in which the mobile terminal 100 does not respond to a touch or key input (S350).

In the lock mode, the mobile terminal 100 does not perform any operation in response to a touch or key input. The lock mode may be set in the mobile terminal 100 for all operation menus or for only certain operation menus. For example, the lock mode may be set in the mobile terminal 100 only for an outgoing call menu, an internet access menu, and a privacy protection menu. In response to the lock mode being set in the mobile terminal 100, a predetermined icon may be displayed or a predetermined alarm signal (such as an alarm sound or a haptic effect) may be output in order to alert the user to setting of the lock mode.

The controller 180 may determine whether a multi-touch input (including first and second touch inputs respectively detected from first and second touch areas, respectively) is detected from the display module 151 (S355).

Parts on the display module 151 that the user may touch (such as with the thumbs) while holding (or touching) the mobile terminal 100 with both hands may be set as the first and second touch areas.

When it is determined (in operation S355) that a multi-touch input (including the first and second touch inputs that have been detected from the display module 151), the controller 180 may release the mobile terminal 100 from the lock mode (S360). In response to the mobile terminal 100 being released from the lock mode, a predetermined icon may be displayed or a predetermined alarm signal (such as an alarm sound or a haptic effect) may be output in order to alert the user to the release of the mobile terminal 100 from the lock mode.

After the release of the mobile terminal 100 from the lock mode, the controller 180 may control the mobile terminal 100 to enter any operation mode selected by the multi-touch input (S365).

According to this exemplary embodiment, the user may easily unlock the mobile terminal 100 and then instantly provide the mobile terminal 100 in a predetermined operation mode by making a multi-touch input, such as with the thumbs while holding the mobile terminal 100 with both hands, for example. The multi-touch input may be provided in other ways.

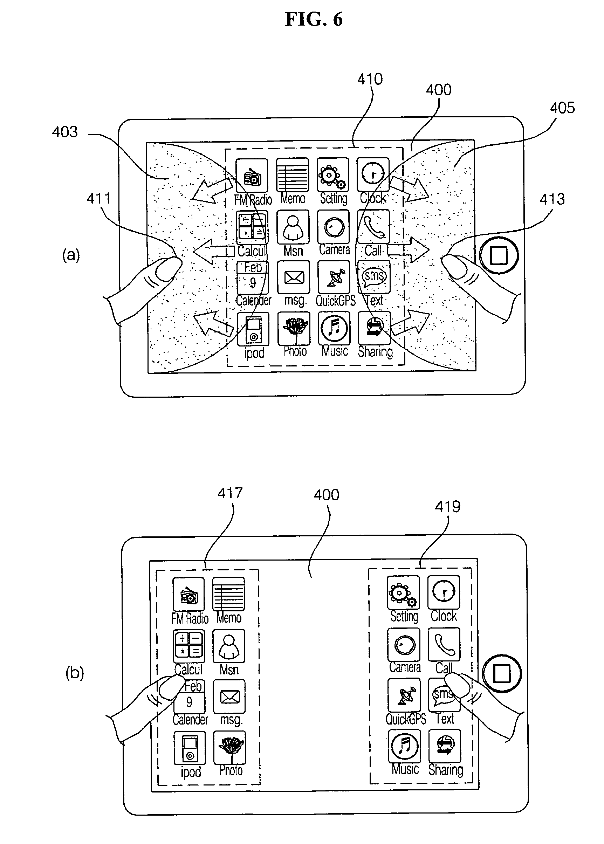

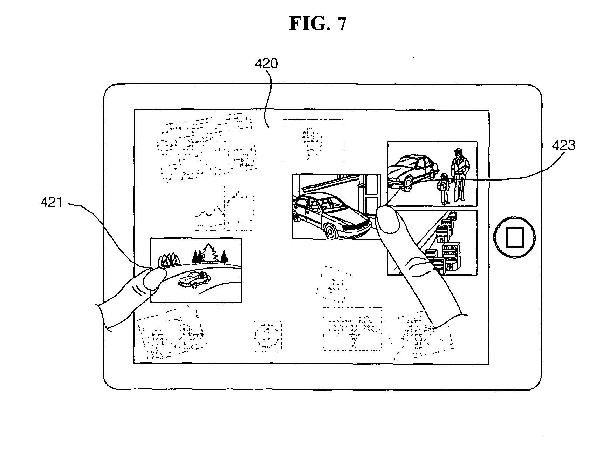

The FIG. 4 embodiment may hereinafter be described with reference to FIGs. 6 and 7.

FIGS. 6(a) and 6(b) show an example in which a multi-touch input (including first and second touch inputs 411 and 413 detected from first and second touch areas 403 and 405, respectively) is detected from an operation screen 400 (including a plurality of menu icons 410), and the menu icons 410 may move to two regions 417 and 419 that include points of detection of the first and second touch inputs 411 and 413, respectively.

As a result of movement of the menu icons 410, a user may easily touch the menu icons 410 with thumbs (or other parts or item) while holding (or touching) the mobile terminal 100, such as with both hands.

When the user detaches both fingers (or thumbs) used to generate the first and second touch inputs 411 and 413 from the operation screen 400, the menu icons 410 may return to their original (or previous) position. The menu icons 410 may also return to their original (or previous) position when the user detaches one of the fingers (or thumbs) used to generate the first and second touch inputs 411 and 413 from the operation screen 400 and then no further user input may be detected from the operation screen 400 for more than a predetermined amount of time.

When the user detaches one of the fingers (or thumbs) used to generate the first and second touch inputs 411 and 413 from the operation screen 400 and flicks the operation screen 400, another display screen may be displayed, rather than the operation screen 400. Some of the menu icons 410 may be configured to not move to the two regions 417 and 419, but rather to be displayed at a fixed position regardless of the multi-touch input (including the first and second touch inputs 403 and 405). In this example, the menu icons 410 configured to be displayed at a fixed position regardless of the multi-touch input (including the first and second touch inputs 403 and 405) may be displayed differently in color or in shape from other menu icons 410 so as to be easily recognizable.

FIG. 7 shows an example in which a first touch input 421 (i.e., a touch on one of a plurality of scrapped items displayed on an operation screen 420) and a second touch input 423 (i.e., a touch on a background of the scrapped items) are detected from the operation screen 420, one or more scrapped items having the same tag as the scrapped item selected by the first touch input 421 may move to the point of detection of the second touch input 423.

That is, one or more items having a same attribute(s) as an item selected by one touch input may be gathered together by another touch input. The FIG. 7 example may be applied not only to scrapped items but also to thumbnails, icons, messages, emails, and/or search results.

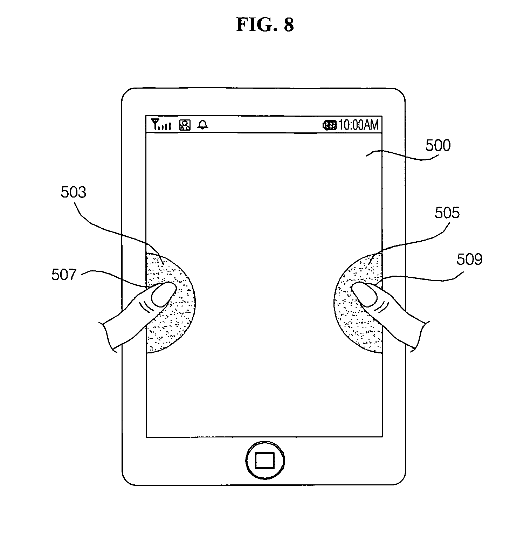

The FIG. 5 embodiment may hereinafter be described with reference to FIGs. 8 through 15.

FIG. 8 shows an example in which a multi-touch input (including first and second touch inputs 507 and 509 detected from first and second touch areas 503 and 505, respectively) is detected from a display screen 500 when the mobile terminal 100 is in a lock mode, and the mobile terminal 100 may be released from the lock mode.

That is, a user may easily unlock the mobile terminal 100, without requiring additional processes for unlocking the mobile terminal 100, by touching the first and second touch areas 503 and 505 while holding (or touching) the mobile terminal 100, such as with both hands.

In order to prevent an accidental unlocking of the mobile terminal 100, the first and second touch areas 503 and 505 may be set at particular parts of the display screen 500, (e.g. on either side of the display screen 500), and may have a particular size. A screen effect (such as lighting) may be applied to the first and second touch areas 503 and 505 in response to the mobile terminal 100 being held with both hands so that the first and second touch areas 503 and 505 may be easily recognizable.

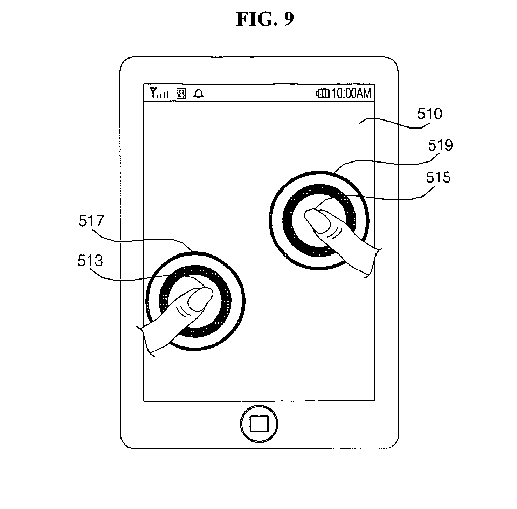

FIG. 9 shows an example in which a user generates a multi-touch input by touching two arbitrary positions 513, 515 on a display screen 510 with two fingers, for example, and a screen effect (such as lighting) may be applied to two circular areas 517, 519 respectively including the two arbitrary positions. A size or magnitude of the screen effect may gradually decrease over time. In response to the size or magnitude of the screen effect decreasing below a predetermined level, the mobile terminal 100 may be configured to be unlocked.

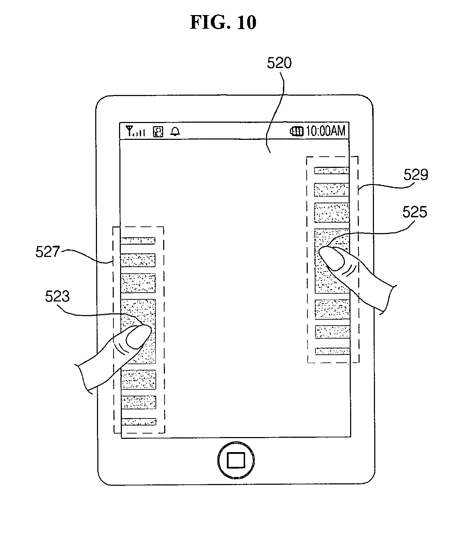

FIG. 10 shows an example in which a user generates a multi-touch input by touching two arbitrary positions 523, 525 on a display screen 520 with two fingers, for example, and a screen effect (such as lighting) may be applied to two rectangular areas 527, 529 respectively including the two arbitrary positions. The size or magnitude of the screen effect may gradually decrease over time. In response to the size or magnitude of the screen effect decreasing below a predetermined level, the mobile terminal 100 may be unlocked.

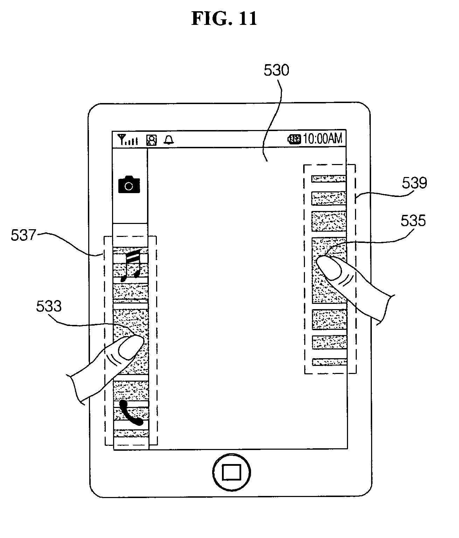

FIG. 11 shows an example in which a user generates a multi-touch input by touching a particular icon 533 on a display screen 530 with one finger, and an arbitrary position 535 on a display screen 520 with another finger, while the mobile terminal 100 is provided in a lock mode, and a screen effect (such as lighting) may be applied to two rectangular areas 537, 539 respectively including the particular icon 533 and the arbitrary position 535. A size or magnitude of the screen effect may gradually decrease over time. In response to the size or magnitude of the screen effect decreasing below a predetermined level, the mobile terminal 100 may be released from the lock mode and may readily enter an operation mode corresponding to the particular icon.

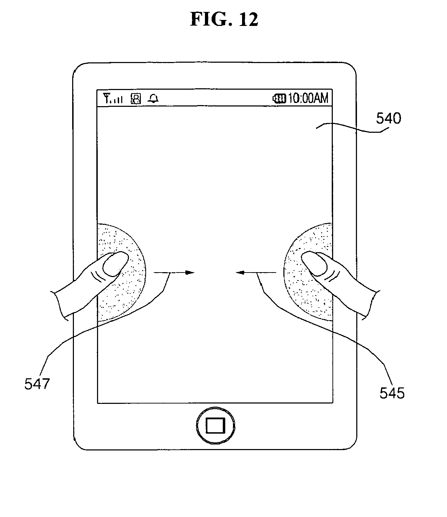

FIG. 12 shows an example in which a user touches a display screen 540 with two fingers and then drags the two fingers closer together, as shown by reference numerals 545 and 547, while the mobile terminal 100 is in a lock mode, and the mobile terminal 100 may be released from the lock mode.

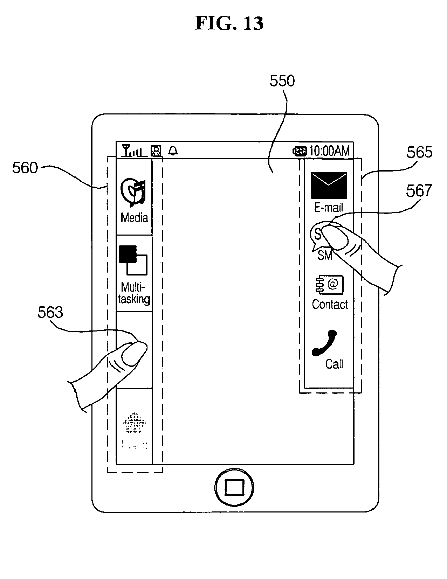

FIG. 13 shows an example in which a first touch input 563 for selecting one of a plurality of icons 560 displayed on a display screen 550 is generated (such as by a finger of the left hand of a user) when the mobile terminal 100 is in a lock mode, one or more sub-icons 565 corresponding to the selected icon 560 may be displayed on the display screen 550. In an example in which a second touch input 567 for selecting one of the sub-icons 565 is detected, the mobile terminal 100 may be released from the lock mode and may readily enter an operation mode corresponding to the selected sub-icon 565.

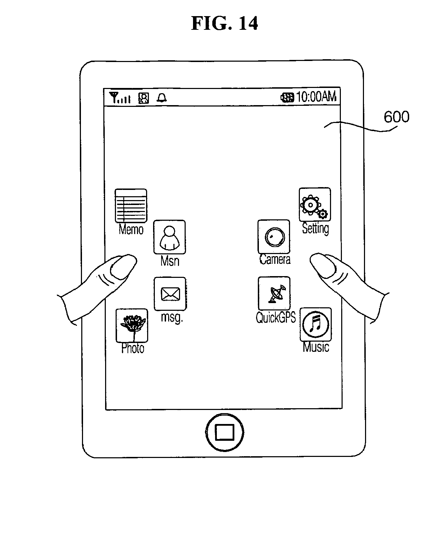

FIG. 14 shows a display screen 600 in response to the mobile terminal 100 being released from a lock mode. Icons corresponding to frequently-used menus or functions may be appropriately arranged on the display screen 600 such that they may be easily accessible to the fingers of either hand of a user.

The FIG. 14 example may also be applied to an example in which the mobile terminal 100 is released from a manner mode or a flight mode.

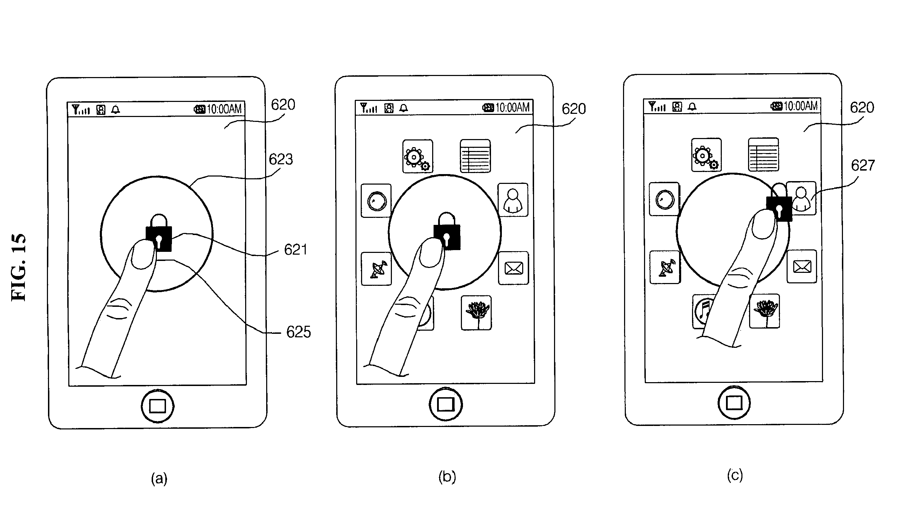

FIG. 15(a) shows an example in which a user touches a display screen 620 with a finger, and a circle 623 and a lock icon 621 may be displayed on the display screen 620. FiGs. 15(a) and 15(b) show an example in which the user touches the lock icon 623, as indicated by reference numeral 625, and a plurality of icons may be displayed around the circle 623. FIG. 15(c) shows an example in which the user drags and drops the lock icon 621 onto one of the icons around the circle 623 (e.g., an icon 627), and a function corresponding to the icon 627 may be readily performed.

The mobile terminal 100 may be configured in various manners, other than those set forth herein, to be released from a lock mode and to enter a predetermined operating mode.

Embodiments of the present invention may be realized as code that may be read by a processor (such as a mobile station modem (MSM)) included in a mobile terminal and that may be written on a computer-readable recording medium. The computer-readable recording medium may be any type of recording device in which data is stored in a computer-readable manner. Examples of the computer-readable recording medium may include a ROM, a RAM, a CD-ROM, a magnetic tape, a floppy disc, an optical data storage, and a carrier wave (e.g., data transmission through the internet). The computer-readable recording medium may be distributed over a plurality of computer systems connected to a network so that computer-readable code is written thereto and executed therefrom in a decentralized manner. Functional programs, code, and code segments needed for realizing embodiments may be easily construed by one of ordinary skill in the art.

Touchable objects may be moved around on a display screen, or a mobile terminal may be unlocked, by touching multiple touch areas on the display screen while holding the mobile terminal, such as with both hands. Therefore, various operations performed by a mobile terminal may be effectively controlled even when both hands are occupied by holding the mobile terminal.

Embodiments may provide a mobile terminal and an operation control method of the mobile terminal in which various functions may be performed in response to a touch input being made when the mobile terminal is held in both hands (or other parts or items).

An operation control method of a mobile terminal may include: displaying a display screen (including one or more touchable objects) on a display module; receiving a multi-touch input (including first and second touch inputs detected from first and second touch areas, respectively) on the display module; and moving the touchable objects to areas that respectively include points of detection of the first and second touch inputs in response to the received multi-touch input.

A mobile terminal may include: a display module configured to display thereon a display screen (including one or more touchable objects); and a controller configured to, in response to a multi-touch input (including first and second touch inputs detected from first and second touch areas, respectively) on the display module being received, move the touchable objects to areas that respectively include points of detection of the first and second touch inputs.

An operation control method of a mobile terminal may include: providing the mobile terminal in a lock mode; receiving a multi-touch input (including first and second touch inputs detected from first and second touch areas, respectively) on a display module, and the first and second touch areas are set for releasing the mobile terminal from the lock mode; and releasing the mobile terminal from the lock mode and entering a predetermined operation mode in response to the received multi-touch input.

A mobile terminal may also include: a display module; and a controller configured to, in response to a multi-touch input (including first and second touch inputs detected from first and second touch areas, respectively) on the display module being received when the mobile terminal is provided in a lock mode, release the mobile terminal from the lock mode and enter a predetermined operation mode in response to the received multi-touch input, the first and second touch areas being set for releasing the mobile terminal from the lock mode.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to affect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method of a mobile terminal, the method comprising:
displaying a first object on a display screen of a display module;
receiving a multi-touch input on the display module, the multi-touch input including a first touch input at a first touch area of the display screen and a second touch input at a second touch area of the display screen; and
displaying, in response to the multi-touch input, the first object at an area that correspond to the first touch or and the second touch input.

2. The method of claim 1, wherein displaying the first object includes displaying the first object at an area that corresponds to the first touch area and displaying a second object at an area that corresponds to the second touch area.

3. The method of claim 2, further comprising displaying the first and second objects at previous positions when the first touch input and the second touch input are no longer detected for more than a predetermined amount of time.

4. The method of claim 1, further comprising:
receiving a touch input to select a displayed object; and
performing an operation corresponding to the selected object.

5. The method of claim 1, further comprising:
receiving a flick input from the display screen; and
displaying another display screen on the display module in response to receiving the flick input.

6. The method of claim 1, further comprising:
displaying a second object at a fixed position regardless of the multi-touch input, wherein the second object is displayed differently from the first object so as to be distinguishable from the first object.

7. The method of claim 1, wherein the first object comprises a menu icon, a thumbnail, or a list item.

8. The method of claim 1, further comprising:
providing the mobile terminal in a lock mode;
receiving the multi-touch input on the display; and
releasing the mobile terminal from the lock mode and providing the mobile terminal in a predetermined operation mode in response to receiving the multi-touch input.

9. The method of claim 8, further comprising applying a screen effect to the first touch area and the second touch area such that the first touch area and the second touch area are distinguished.

10. The method of claim 8, further comprising providing an alarm signal corresponding to providing the lock mode or releasing the mobile terminal from the lock mode.

11. A mobile terminal comprising:
a display module to display a first object on a display screen; and
a controller configured to, in response to receiving a multi-touch input that includes a first touch input at a first touch area of the display screen and a second touch input at a second touch area of the display screen, display the first object at an area that corresponds to the first touch input or the second touch input.

12. The mobile terminal of claim 11, wherein the controller displays the first object at an area that corresponds to the first touch area and the controller displays a second object at an area that corresponds to the second touch area.

13. The mobile terminal of claim 11, wherein the controller displays the first and second object at previous positions when the first touch input and the second touch input are no longer detected for more than a predetermined amount of time.

14. The mobile terminal of claim 11, wherein in response to receiving a touch input to select a displayed object, the controller to perform an operation corresponding to the selected object.

15. The mobile terminal of claim 11, wherein the controller is configured to, in response to receiving the multi-touch when the mobile terminal is in a lock mode, release the mobile terminal from the lock mode and provide the mobile terminal in a predetermined operation mode, the first touch area and the second touch area being previously determined for releasing the mobile terminal from the lock mode.
